# FASCICULE DE BREVET EUROPEEN

(11) **EP 3 504 466 B1**
(45) Date de publication et mention de la délivrance du brevet: **02.09.2020**
(21) Numéro de dépôt: 17751799.2
(22) Date de dépôt: 11.07.2017
(51) Int. Cl.: F16H 7/02, F16H 57/01

(54) **PROCEDE DE DETECTION D'UNE DEFAILLANCE DE COURROIE RELIANT UN ALTERNO-DEMARREUR A UN MOTEUR THERMIQUE**
VERFAHREN ZUR ERKENNUNG EINES FEHLERS EINER RIEMENVERBINDUNG ZWISCHEN EINEM GENERATOR-STARTER UND EINER WÄRMEKRAFTMASCHINE
METHOD FOR DETECTING A FAILURE OF A BELT CONNECTING AN ALTERNATOR STARTER TO A HEAT ENGINE

(30) Priorité: 24.08.2016 FR 1657896
(43) Date de publication de la demande: 03.07.2019
(73) Titulaire: PSA Automobiles SA, 78300 Poissy (FR)
(72) Inventeur: MARCHYLLIE, Alexis, 33160 St Medard En Jalles (FR); SERDJANIAN, Gregor, 75020 Paris (FR); MILHAU, Yohan, 78400 Chatou (FR)
(86) Numéro de dépôt international: PCT/FR2017/051908
(87) Numéro de publication internationale: WO 2018/037173

(56) Documents cités:
- EP-A1- 2 441 949
- WO-A1-2007/109896
- WO-A2-03/036133
- FR-A1- 3 026 805

## Description

L'invention porte sur un procédé de détection d'une défaillance d'une courroie reliant un alterno-démarreur à un moteur thermique dans un véhicule automobile, avantageusement un véhicule hybride comprenant aussi un moteur autre que le moteur thermique pour sa propulsion ou un véhicule muni d'un système d'arrêt et de redémarrage automatiques du moteur thermique du véhicule automobile, la défaillance pouvant être une courroie cassée ou glissante.

Ce procédé de détection d'une défaillance de la courroie reliant l'alterno-démarreur au moteur thermique se fait par comparaison du régime de l'alterno-démarreur avec le régime moteur, avec affranchissement de fausses détections liées à un éventuel glissement de la courroie.

Un moteur thermique entraîne un arbre de sortie de vilebrequin pour l'entraînement des roues motrices du véhicule automobile. Lors d'un démarrage assisté, la transmission de mouvement entre l'arbre de sortie d'un alterno-démarreur et l'arbre de sortie de vilebrequin est généralement réalisé par adhérence entre une courroie d'accessoires et des poulies de l'arbre de sortie de vilebrequin et de l'arbre de sortie de l'alternateur. Une telle courroie dite d'accessoires est en général plate et dépourvue de dents.

Une telle courroie peut être cassée ou patiner. Le patinage de la courroie peut se produire lorsque la courroie est très humide, par exemple lors de fortes pluies ou de grandes projections d'eau. L'adhérence entre la courroie et les poulies du vilebrequin et de l'alterno-démarreur est alors insuffisante. Ainsi, dans ces conditions quand le moteur thermique procède à un démarrage assisté, la poulie de l'arbre d'alterno-démarreur peut patiner sur la courroie et l'alterno-démarreur ne parvient pas à mettre en oeuvre un démarrage assisté.

Pour une courroie cassée, le cas est plus grave et un démarrage du moteur thermique est rendu impossible. Il convient donc que l'arrêt du moteur thermique soit suspendu si un risque de courroie cassée ou humide est détecté, cet arrêt n'étant que temporaire pour une courroie humide, le temps que la courroie sèche.

Des solutions existantes pour détecter des courroies cassées ou pouvant patiner consistent à comparer les régimes de rotation du moteur thermique et de l'alterno-démarreur durant le démarrage du moteur thermique et à diagnostiquer une casse de la courroie si l'écart de régime est supérieur à une valeur prédéfinie pendant un temps défini.

Ces solutions ont pour défaut de ne diagnostiquer la casse de la courroie seulement lors du démarrage du moteur thermique. Ces solutions peuvent être satisfaisantes pour des applications automobiles non hybrides pour lesquelles le moteur thermique est en rotation durant toute la phase de roulage. Par contre, ces solutions se révèlent insuffisantes sur des applications hybrides pour lesquelles les arrêts et redémarrages du moteur thermique durant la phase de roulage sont fréquents et les cas de non redémarrage critiques pour la sécurité du conducteur.

Le document FR-B-2 965 880 décrit un procédé de détection d'un glissement d'une courroie d'accessoires. Si un glissement de la courroie d'accessoires est détecté alors l'arrêt du moteur thermique n'est pas commandé. Le procédé comporte la détermination d'un régime du moteur et d'un régime de l'alternateur, la comparaison des régimes déterminés du moteur et de l'alternateur et la détection du glissement de la courroie d'accessoires en fonction d'un résultat de cette comparaison. Les étapes mentionnées sont réalisées lors d'une phase de préparation d'un arrêt du moteur thermique pendant laquelle l'injection de carburant dans des chambres de combustion est maintenue tout en fermant l'arrivée d'air d'admission dans ces chambres. On connaît encore du document FR3026805 un procédé de détection d'une défaillance de courroie reliant un alterno-démarreur à un moteur thermique.

Dans ces documents, il n'est donné aucune indication quant à la manière de comparer les régimes du moteur et de l'alternateur pour déterminer si une courroie est glissante ou non. De plus, un tel procédé ne permet pas de différencier des courroies glissantes des courroies cassées. Ce document n'aborde donc pas le problème de la différenciation lors de la détection entre les courroies glissantes et les courroies cassées.

Or si une courroie cassée implique une interdiction définitive d'arrêt du moteur thermique autre que pour l'arrêt du véhicule, le véhicule ne pouvant redémarrer tant que la courroie cassée n'est pas changée, une courroie glissante n'implique qu'une interdiction temporaire d'arrêt du moteur, le temps que la courroie sèche de sorte que la courroie ne puisse plus patiner. La décision d'interdiction est donc différente selon que la détection cible une courroie cassée ou une courroie glissante.

Par conséquent, le problème à la base de l'invention est de détecter de manière sûre et simple la non-conformité d'une courroie reliant un alterno-démarreur à un moteur thermique par observation des régimes de ces deux éléments en évitant de fausses détections de courroies glissantes comme des courants cassées.

Pour atteindre cet objectif, il est prévu selon l'invention un procédé de détection d'une défaillance d'une courroie reliant un alterno-démarreur à un moteur thermique, dans lequel :
- on mesure ou estime le régime de l'alterno-démarreur lorsque le moteur thermique est tournant à un régime moteur compris entre deux seuils de régime moteur prédéfinis et si le régime de l'alterno-démarreur s'avère inférieur à une première valeur de régime prédéfinie au moins pendant une première durée prédéfinie, la courroie est détectée comme étant potentiellement cassée,
- puis, on impose un couple générateur nul à l'alterno-démarreur,
   et si le régime de l'alterno-démarreur s'avère inférieur à une deuxième valeur de régime prédéfinie durant une deuxième durée prédéfinie, la courroie est confirmée comme étant cassée ou dans le cas où la deuxième valeur de régime (Nd2) prédéfinie est atteinte avant une fin de la deuxième durée (td2) prédéfinie, la courroie (3) est considérée comme glissante mais non cassée.

La présente invention permet de détecter une courroie cassée reliant un alterno-démarreur à un moteur thermique par observation du régime de rotation de ces deux éléments, ainsi que du couple générateur de l'alterno-démarreur. Ce couple générateur est le couple de frein entraînant une production électricité. La présente invention prévoit d'annuler le couple générateur de l'alterno-démarreur pour rendre le diagnostic robuste à une fausse détection de casse liée à un état glissant de la courroie.

En effet, un des problèmes de la détection d'une courroie cassée est de distinguer les courroies glissantes des courroies cassées. L'état glissant d'une courroie peut n'être que temporaire tandis qu'une courroie cassée l'est irrémédiablement. Il s'ensuit que la réponse à une courroie cassée est définitive, par exemple une interdiction d'arrêter le moteur thermique dans un véhicule hybride alors que la réponse à une courroie glissante peut n'être que temporaire, par exemple une interdiction pendant une certaine durée afin que la courroie glissante, quand elle est humide, sèche.

Le procédé selon la présente invention permet d'améliorer l'efficacité d'éventuels procédés existants de détection de la casse d'une courroie reliant un alterno-démarreur à un moteur thermique, par comparaison des régimes de rotation de ces deux organes. L'état de l'art évoque des procédés permettant de diagnostiquer une courroie cassée lors d'un démarrage du moteur thermique. Or, pour des applications de véhicules hybrides, voire micro-hybrides, la décision d'arrêter le moteur thermique durant un roulage ne peut être prise de façon sécuritaire que si les moyens de redémarrer ce moteur thermique sont disponibles. Ceci est, par exemple, le cas quand un couple important est demandé par le conducteur du véhicule. Dans le cas d'une courroie cassée, cette demande ne peut pas être remplie.

En effet, si une courroie d'alterno-démarreur se rompt durant un roulage et si cette situation n'est pas détectée, la décision de ne pas arrêter le moteur n'est pas prise, alors qu'en l'absence de lien physique entre l'alterno-démarreur et le moteur, ce dernier sera dans l'impossibilité d'être redémarré.

La présente invention se propose donc d'élargir la plage de détection d'une courroie cassée mais répond également à un problème posé par la comparaison des régimes de rotation de l'alterno-démarreur et du moteur thermique en phase de moteur tournant. A savoir, en cas de roulage dans un milieu humide, et en présence d'un couple générateur appliqué par l'alterno-démarreur qui freine le moteur, la courroie devenue glissante peut perdre toute adhésion à une poulie du moteur thermique entraînant l'annulation du régime de l'alterno-démarreur et une détection à tort de casse de la courroie alors qu'il s'agit d'un glissement de la courroie.

Durant l'élaboration de la présente invention, il a été constaté qu'en l'absence de couple générateur appliqué par l'alterno-démarreur, le glissement de la courroie entraînant une annulation du régime alterno-démarreur était très fortement limité. Cet effet surprenant permet de différencier lors de la détection une courroie glissante d'une courroie cassée et de prévoir une solution spécifiquement adaptée soit à une courroie glissante ou soit à une courroie cassée.

L'intérêt technique réside d'une part dans la forte réduction du risque de fausse détection d'une courroie cassée, qui entraînerait des reconfigurations limitant la disponibilité du véhicule pour le conducteur ainsi que des alertes au conducteur l'incitant à faire réparer son véhicule à tort. D'autre part, l'intérêt technique réside dans l'extension de la plage de détection d'une casse de la courroie permettant de mettre en place des reconfigurations adaptées, notamment l'interdiction d'arrêt du moteur thermique durant le roulage, ou l'application de mesures pour limiter l'impact de la cassure sur la production d'électricité qui est la fonction assurée au nominal par l'alterno-démarreur via la courroie en question.

Avantageusement, la première valeur de régime prédéfinie et / ou la deuxième valeur de régime prédéfinie sont choisies de sorte à filtrer d'éventuelles oscillations de régime de l'alterno-démarreur autour de son régime nul.

Avantageusement, la première valeur de régime prédéfinie est proche de la valeur nulle en étant inférieure à 100 tours/minute et la première durée prédéfinie est comprise entre 20 et 200 millisecondes, le régime de l'alterno-démarreur étant ramené dans un référentiel vilebrequin, un vilebrequin étant entraîné par le moteur thermique. Ces valeurs permettent, si besoin est, de différencier une courroie glissante d'une courroie cassée. Pour toutes les courroies cassées, ces valeurs de régime définies ne seront pas dépassées pendant une telle première durée prédéfinie, mais il se peut que des courroies dans un état temporaire les rendant très glissantes remplissent ces conditions. Comme l'alterno-démarreur est démultiplié par rapport au moteur thermique, il convient de ramener son régime à celui du moteur d'où un recalcul du régime de l'alterno-démarreur dans un référentiel commun à celui du moteur pour une comparaison des régimes moteur et de l'alterno-démarreur.

Avantageusement, la deuxième durée prédéfinie est supérieure de 20 à 50 fois à la première durée prédéfinie, de préférence d'environ 5 secondes.

Avantageusement, la deuxième valeur de régime prédéfinie est inférieure à 50 tours/minute.

Avantageusement, il est procédé en phase de démarrage du moteur thermique à une comparaison des régimes du moteur et de l'alterno-démarreur et si la différence entre ces régimes est supérieure à une valeur de différence de régime prédéfinie pendant au moins une troisième durée prédéfinie, il est détecté que la courroie est cassée.

Cette détection est simple de mise en oeuvre et constitue une première estimation permettant de sélectionner si besoin est des première et deuxième valeurs de régime et des première et deuxième durées.

Avantageusement, la valeur de différence de régime prédéfinie est de 3.000 tours/minute et la troisième durée prédéfinie est de 0,3 seconde.

L'invention concerne un procédé de gestion du fonctionnement d'un moteur thermique comprenant un système d'arrêt et de redémarrage automatique du moteur thermique, une courroie reliant un alterno-démarreur au moteur thermique, dans lequel il est effectué une détection de courroie cassée conformément à un procédé de détection selon l'une quelconque des variantes précédemment décrites, une interdiction d'arrêt automatique du moteur thermique étant valide dès que la courroie est détectée comme étant cassée.

Un arrêt du moteur thermique avec une courroie cassée pourrait conduire à un non-démarrage du moteur thermique avec les désavantages précédemment mentionnés, notamment des désavantages de sécurité par aucune réponse du moteur à une demande de couple par le conducteur nécessitant le redémarrage du moteur thermique.

Avantageusement, quand une deuxième valeur de régime pour l'alterno-démarreur et une deuxième durée sont prédéfinies et que la deuxième valeur de régime est atteinte avant la fin de la deuxième durée, ce qui correspond à la détection d'une courroie glissante, l'interdiction d'arrêt du moteur thermique n'est que temporaire pendant une quatrième durée prédéfinie et calibrable.

Il est en effet très avantageux de différencier une courroie cassée d'une courroie glissante. L'état glissant d'une courroie, par exemple par projection d'eau, n'est que temporaire tandis que l'état d'une courroie cassée est définitif. Pour une courroie glissante humide, l'interdiction d'arrêt du moteur thermique est temporaire et dure le temps estimé pour que la courroie sèche. La quatrième durée peut être de l'ordre d'une à plusieurs minutes et dépendre des conditions climatiques.

L'invention concerne un ensemble comprenant un moteur thermique, un alterno-démarreur , une courroie reliant l'alterno-démarreur au moteur thermique, une unité de contrôle-commande pilotant l'alterno-démarreur et le moteur thermique, dans lequel l'unité de contrôle-commande comprend les moyens d'acquisition, de traitement par instructions logicielles stockées dans une mémoire et des moyens de commandes requis pour la mise en œuvre d'un procédé de détection selon l'une quelconque des variantes précédemment décrites.

Avantageusement, l'ensemble comprenant en outre un système d'arrêt et de redémarrage automatique du moteur thermique, l'unité de contrôle-commande (4) comprend en outre les moyens d'acquisition, de traitement par instructions logicielles stockées dans une mémoire et des moyens de commandes requis pour la mise en œuvre d'un procédé de gestion l'une quelconque des variantes précédemment décrites.

La solution de la présente invention est mise en œuvre par une unité de contrôle-commande déjà existante dans l'ensemble moteur et alterno-démarreur de l'état de la technique. La solution de la présente invention implique des modifications purement logicielles sans une complète refonte de la programmation de l'unité de contrôle-commande ou l'ajout d'une nouvelle unité supplémentaire.

D'autres caractéristiques, buts et avantages de la présente invention apparaîtront à la lecture de la description détaillée qui va suivre et au regard des dessins annexés donnés à titre d'exemples non limitatifs et sur lesquels :

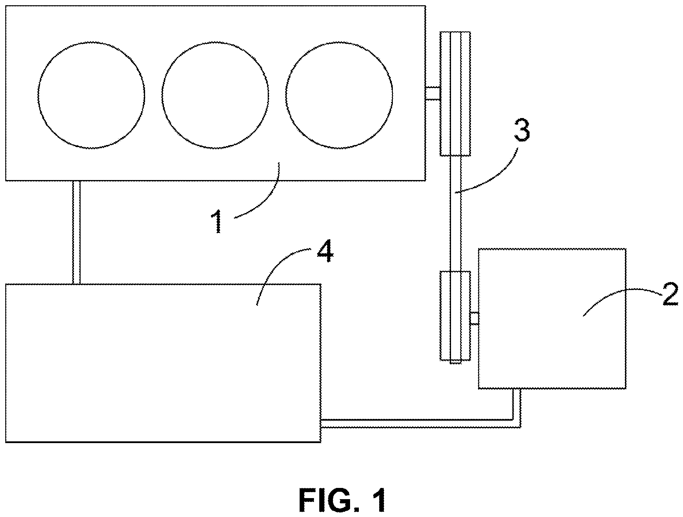

- la figure 1 est une représentation schématique d'un ensemble moteur thermique et d'un alterno-démarreur pouvant servir à la mise en œuvre du procédé de détection selon la présente invention,

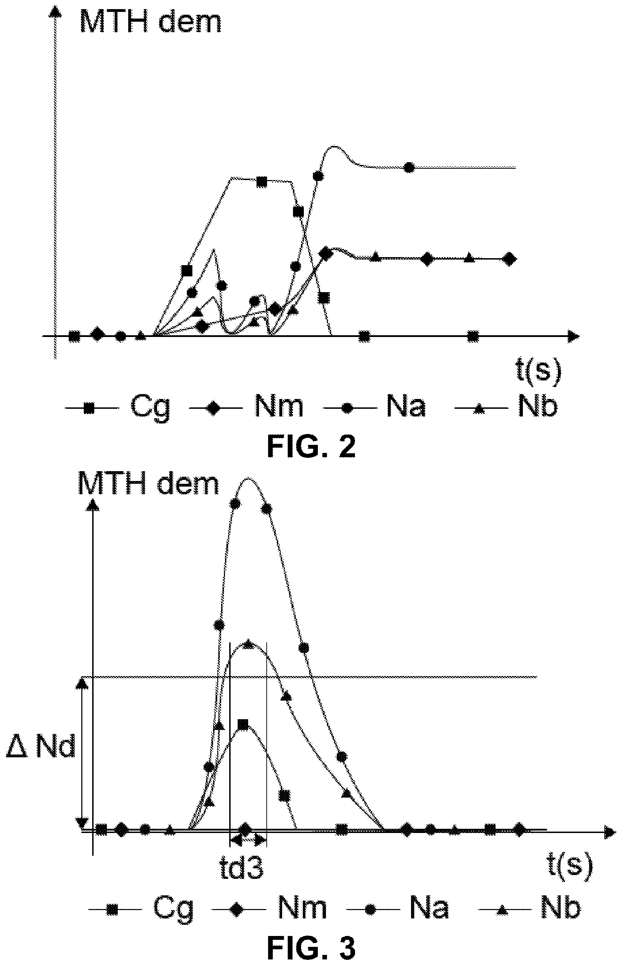

- les figures 2 et 3 montrent des courbes respectives de couple générateur de l'alterno-démarreur et de régimes moteur et d'alterno-démarreur respectivement pour une courroie glissante et une courroie cassée, lors d'un démarrage du moteur thermique, le procédé de détection relative à ces figures étant selon un mode préférentiel de réalisation du procédé de détection conformément à la présente invention,

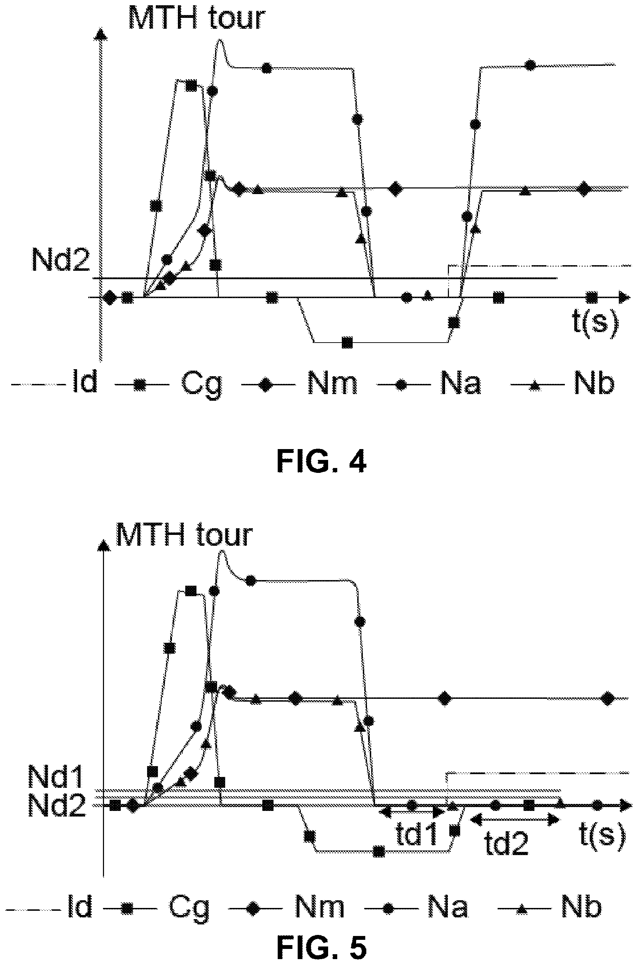

- les figures 4 et 5 montrent des courbes respectives de couple générateur de l'alterno-démarreur et de régimes moteur et d'alterno-démarreur respectivement pour une courroie glissante et une courroie cassée, avec moteur thermique tournant à régime maintenu constant et maintien d'un couple générateur nul ou annulation du couple à l'alterno-démarreur conformément au procédé de détection selon la présente invention.

Dans ce qui va suivre, il est fait référence à toutes les figures prises en combinaison. Quand il est fait référence à une ou des figures spécifiques, ces figures sont à prendre en combinaison avec les autres figures pour la reconnaissance des références numériques désignées.

En se référant particulièrement à la figure 1, un ensemble moteur thermique 1 et alterno-démarreur 2 présente une courroie 3 reliant une poulie de l'alterno-démarreur 2 à une poulie du moteur thermique 1. Une unité de contrôle-commande 4 est en charge du bon fonctionnement de l'ensemble en communiquant en émission comme en réception avec le moteur thermique 1 et l'alterno-démarreur 2. L'unité de contrôle-commande 4 comprend les moyens d'acquisition, de traitement par instructions logicielles stockées dans une mémoire et des moyens de commandes requis pour la mise en œuvre de la stratégie de l'invention.

C'est pour un tel ensemble que la présente invention prévoit d'appliquer un procédé de détection d'une défaillance de courroie 3, la défaillance pouvant être une courroie cassée ou une courroie glissante, et un procédé de gestion du fonctionnement d'un moteur thermique 1 appliquant une interdiction d'arrêt automatique du moteur thermique 1 dès que la courroie 3 est détectée comme étant cassée.

Un arrêt automatique signifie un arrêt du moteur thermique 1 par un système approprié d'arrêt et de redémarrage automatiques du moteur thermique dans le cadre par exemple d'un véhicule hybride pour la propulsion du véhicule par un moteur autre que le moteur thermique 1 ou pour un véhicule doté seulement d'un moteur thermique hybride pour la propulsion du véhicule et ne s'étend pas à un arrêt souhaité par le conducteur lors de l'arrêt du véhicule et la fin du roulage. Après un tel arrêt souhaité, pour une courroie 3 cassée, le moteur ne pourra cependant pas démarrer sans changement de courroie 3 mais il pourrait permettre à une courroie 3 glissante mouillée de sécher et de redevenir opérationnelle.

En se référant à toutes les figures et notamment à la figure 5, la présente invention concerne un procédé de détection d'une défaillance de courroie 3 reliant un alterno-démarreur 2 à un moteur thermique 1 de véhicule automobile, la défaillance pouvant être une courroie cassée ou une courroie glissante.

Selon la présente invention, la détection a lieu avec le moteur thermique 1 tournant MTH tour à un régime moteur Nm compris entre deux seuils prédéfinis, par exemple entre 700 et 3.000 tours/minute, nul à l'alterno-démarreur 2. Pendant cette détection, le régime de l'alterno-démarreur Na, Nb est mesuré ou estimé et si le régime de l'alterno-démarreur Na, Nb s'avère inférieur à une première valeur de régime Nd1 prédéfinie au moins pendant une première durée td1 prédéfinie, la courroie 3 est détectée comme étant potentiellement cassée. Le régime Nd1 et la durée td1 ne sont montrés qu'à la figure 5 mais pourraient l'être aussi à la figure 4.

Le moteur thermique 1 est alors autonome, en rotation maîtrisée, à un régime donné dépendant du couple de consigne transmis par une unité de contrôle-commande 4, de la vitesse véhicule et du rapport de boîte de vitesses par exemple.

Aux figures 2 à 5, il est montré respectivement des courbes Cg pour le couple générateur de l'alterno-démarreur, Nm pour le régime moteur, Na pour le régime alterno-démarreur et Nb pour le régime alterno-démarreur dans un référentiel vilebrequin, la courbe Id symbolisant l'inhibition du couple générateur.

Le régime alterno-démarreur dans le référentiel vilebrequin, Nb, correspond au ratio du régime alterno-démarreur par le rapport de démultiplication, K, entre l'alterno-démarreur et le vilebrequin du moteur. Le régime de l'alterno-démarreur Na, Nb est recalculé pour être comparable à celui le régime du moteur. Comme l'alterno-démarreur 2 est démultiplié par rapport au moteur thermique 1, il convient de ramener son régime à celui du moteur d'où un recalcul du régime de l'alterno-démarreur de base Na afin d'obtenir un régime de l'alterno-démarreur Nb dans un référentiel commun à celui du moteur pour une comparaison des régimes moteur Nm et de l'alterno-démarreur Nb, ce référentiel commun étant un référentiel par rapport au régime du vilebrequin. Un autre référentiel de comparaison pourrait être utilisé mais le référentiel vilebrequin est le plus simple à utiliser.

Ainsi si le régime alterno-démarreur dans le référentiel vilebrequin, Nb, est égal au régime moteur, Nm, la courroie est bien entrainée. Le fait de faire une comparaison entre du régime moteur au régime alterno-démarreur ramené dans le référentiel vilebrequin, Nb, permet de simplifier les calibrations moteur.

Les figures 2 et 4 illustrent le cas de figure d'une courroie 3 glissante et les figures 3 et 5 illustrent le cas de figure d'une courroie 3 cassée.

Les figures 2 à 3 sont relatives à une détection d'une courroie 3 cassée, durant un démarrage dem MTH du moteur thermique 1 et qui sera ultérieurement détaillée. Les figures 4 à 5 sont relatives à une détection selon la présente invention se faisant avec un moteur thermique tournant MTH tour.

Aux figures 4 et 5 à la fin de la première durée td1 prédéfinie, le couple générateur Cg de l'alterno-démarreur 2 qui était négatif pour la fourniture d'électricité est annulé et maintenu nul tandis que le régime moteur Nm est toujours compris entre les deux seuils prédéfinis par exemple 700 et 3000 tours par minute.

A la figure 4, les deux régimes alterno-démarreur Na, Nb remontent à la suite de l'inhibition du couple Cg, pour une courroie 3 glissante tandis qu'à la figure 5, les deux régimes alterno-démarreur Na, Nb restent en dessous de la première valeur de régime Nd1 prédéfinie malgré l'inhibition. La courbe Id symbolise la commande d'inhibition du couple générateur Cg. La figure 5 montre une deuxième valeur de régime Nd2 prédéfinie et une deuxième durée td2 pour un complément de détection qui sera ultérieurement décrit.

Il est possible de mesurer ou d'estimer le régime de l'alterno-démarreur Na, Nb. En général, un tel régime est mesuré, notamment par un capteur à induction, ce qui n'est pas limitatif. La première valeur de régime Nd1 et la première durée td1 sont choisies respectivement suffisamment faible et longue pour que seules des courroies 3 déficientes soient détectées. Il se peut cependant que des courroies 3 glissantes soient alors détectées comme cassées en fonction de la première valeur de régime Nd1 et la première durée td1 sélectionnées. De manière générale, on ne conclut pas que la courroie est cassée après la première durée td1, mais simplement le constat d'une défaillance, autrement dit à ce stade on considère que la courroie est potentiellement cassée.

Dans un mode préférentiel de la présente invention, pour un régime de l'alterno-démarreur Nb ramené dans le référentiel vilebrequin, la première valeur de régime Nd1 prédéfinie peut être proche de la valeur nulle en étant inférieure à 100 tours/minute. La première durée td1 prédéfinie est comprise entre 20 et 200 millisecondes.

La première valeur de régime Nd1 doit être suffisamment basse et la première durée td1 suffisamment longue pour qu'une courroie 3 cassée ne puisse être détectée comme non cassée. En effet, pour une courroie 3 détectée cassée, il sera mis en œuvre une interdiction d'arrêt du moteur thermique 1 et il serait préjudiciable de ne pas mettre en œuvre une telle interdiction pour une courroie 3 cassée détectée à tort en bon état. La première valeur de régime Nd1 définit un alterno-démarreur arrêté, et permet de filtrer les variations de régime liées aux oscillations de rotation de l'alterno-démarreur.

Dans le procédé selon la présente invention, dans une certaine mesure, il est préférable de détecter comme courroie 3 cassée des courroies 3 très glissantes mais non cassées plutôt que de ne pas détecter une courroie 3 cassée.

Pour affiner encore la détection et ne conserver comme détectées cassées que des courroies 3 effectivement cassées, on poursuit le procédé en imposant un couple générateur Cg nul à l'alterno-démarreur 2. Sous cette condition, une courroie 3 est confirmée comme étant cassée si le régime de l'alterno-démarreur Na, Nb s'avère inférieur à une deuxième valeur de régime Nd2 prédéfinie durant une deuxième durée td2 prédéfinie.

La deuxième valeur de régime Nd2 prédéfinie peut être inférieure à la première valeur de régime Nd1 prédéfinie et la deuxième durée td2 prédéfinie peut être supérieure à la première durée td1 prédéfinie, une courroie 3 glissante mais non cassée étant détectée quand la deuxième valeur de régime Nd2 prédéfinie est atteinte et dépassée avant une fin de la deuxième durée td2 prédéfinie. Pour des raisons de simplicité la deuxième valeur de régime Nd2 prédéfinie peut être égale à la première valeur de régime Nd1 prédéfinie.

Cette deuxième détection en association avec la première détection permet par exemple de classer les courroies 3 en trois groupes. Un premier groupe de courroies 3 comprend des courroies 3 n'ayant pas été détectées comme courroies 3 cassées lors de la première détection qui sont des courroies 3 en bon état ou faiblement glissantes. Un deuxième groupe comprend des courroies 3 ayant été détectées comme courroies 3 cassées lors de la première détection mais non lors de la deuxième détection, ces courroies étant des courroies 3 glissantes. Un troisième groupe comprend des courroies 3 ayant été détectées comme courroies 3 cassées lors des première et deuxième détections, ces courroies n'étant pratiquement que des courroies 3 cassées.

Sans que cela soit limitatif, la deuxième durée td2 prédéfinie peut être supérieure de 20 à 50 fois à la première durée td1 prédéfinie. La détection avec la deuxième durée td2 est donc plus sélective que la détection avec la première durée td1.

En se référant plus particulièrement aux figures 2 et 3, dans un mode préférentiel de réalisation, la deuxième valeur de régime Nd2 prédéfinie est inférieure à 50 tours/minute et la deuxième durée td2 prédéfinie est d'environ 5 secondes.

Comme il est montré plus particulièrement aux figures 2 et 3 respectivement pour une courroie glissante et une courroie cassée, il peut être procédé à une détection en phase de démarrage dem MTH du moteur thermique 1 consistant en une comparaison des régimes du moteur Nm et de l'alterno-démarreur Na, Nb, avantageusement le régime de l'alterno-démarreur pris dans le référentiel vilebrequin Nb. Si la différence entre ces régimes est supérieure à une valeur de différence de régime ΔNd prédéfinie pendant au moins une troisième durée td3 prédéfinie, visible à la figure 3 mais pouvant être extrapolée à la figure 2, il est détecté que la courroie 3 est cassée.

Quand mise en œuvre, ce qui n'est pas obligatoire, cette pré-détection a lieu avant la détection proprement dite que propose la présente invention. Cependant, comme cette pré-détection n'est que facultative, elle a été introduite dans la présente demande de brevet après l'exposé du procédé de détection selon la présente demande et non pas dans un possible ordre chronologique de mise en oeuvre.

De manière non limitative, la valeur de différence de régime ΔNd prédéfinie peut être de 3.000 tours/minute et la troisième durée td3 prédéfinie peut être de 0,3 seconde.

Le procédé de détection selon la présente invention sert à valider une interdiction d'arrêt du moteur thermique 1. Cette interdiction est relative à un arrêt automatique du moteur thermique 1 du type précédemment indiqué. L'invention concerne ainsi un procédé de gestion du fonctionnement d'un moteur thermique 1 équipé d'un système d'arrêt et de redémarrage automatiques du moteur thermique, une courroie 3 reliant l'alterno-démarreur 2 au moteur thermique 1.

Dans ce procédé de gestion, il est effectué une détection de courroie 3 cassée conformément à un tel procédé de détection, une interdiction d'arrêt du moteur thermique 1 pour une propulsion par le moteur autre que le moteur thermique 1 étant valide dès que la courroie 3 est détectée comme étant cassée. Ceci peut aussi être valable pour un véhicule automobile comprenant un système d'arrêt et de redémarrage automatiques d'un moteur thermique sans moteur autre que le moteur thermique.

Quand une deuxième valeur de régime Nd2 pour l'alterno-démarreur 2 et une deuxième durée td2 sont prédéfinies et que la deuxième valeur de régime Nd2 est atteinte avant la fin de la deuxième durée td2, ce qui correspond à la détection d'une courroie 3 non cassée mais glissante, l'interdiction d'arrêt du moteur thermique 1 n'est que temporaire pendant une quatrième durée prédéfinie et calibrable. Cette quatrième durée n'est pas illustrée aux figures et est notoirement plus grande que les première et deuxième durées td1, td2. Cette quatrième durée peut par exemple permettre à la courroie 3 glissante de sécher et de ne plus patiner sur les poulies du moteur et de l'alterno-démarreur 2.

Pour la mise en œuvre des procédés de détection et de gestion, la présente invention concerne par exemple un ensemble d'un moteur thermique 1 et d'un alterno-démarreur 2 dans un véhicule automobile hybride. Dans ce véhicule automobile hybride, l'ensemble formant groupe motopropulseur comprend aussi un moteur autre que le moteur thermique 1 pour une propulsion du véhicule.

De manière classique, une courroie 3 relie l'alterno-démarreur 2 au moteur thermique 1 de véhicule automobile et une unité de contrôle-commande 4 pilote l'alterno-démarreur 2 et le moteur thermique 1.

L'unité de contrôle-commande 4 mettant en œuvre un procédé de détection ou un procédé de gestion tels que précédemment décrit présente des moyens de mesure ou d'estimation des régimes du moteur Nm et de l'alterno-démarreur Na, Nb, des moyens de pilotage de l'ensemble assurant au moins une stabilisation du régime moteur Nm et une imposition d'un couple générateur Cg nul à l'alterno-démarreur 2.

L'unité de contrôle-commande 4 présente aussi des moyens de comptage de temps et des moyens de mémorisation d'au moins une première valeur de régime Nd1 et d'une première durée td1 prédéfinies, ainsi que des moyens d'interdiction au moins temporaire de l'arrêt du moteur thermique 1 pour une propulsion par le moteur autre que le moteur thermique 1.

L'unité de contrôle-commande 4 peut aussi mémoriser une deuxième valeur de régime Nd2 et une deuxième durée td1+td2 prédéfinies servant à confirmer ou affiner la détection faite avec la première valeur de régime Nd1 et la première durée td1 prédéfinies.

La présente invention procure un gain de sécurité avec augmentation de la sécurité du conducteur et des passagers pour un véhicule fonctionnant avec des arrêts automatiques du moteur thermique 1. L'interdiction temporaire ou définitive permet la suppression des cas d'échec de redémarrage du moteur pour cause de casse de la courroie 3 non détectée, ce qui entraînait une situation de roulage potentiellement critique.

Un autre gain réside dans le suivi après-vente du véhicule avec une forte limitation des occurrences de fausses détections de casse de courroie 3 diminuant notoirement les retours de véhicule au garage non justifiés.

La présente invention concerne principalement mais pas uniquement les véhicules hybrides de n'importe quel type dont le moteur thermique 1 peut être démarré à tout moment par un alterno-démarreur 2 et ce via une courroie 3 entre l'alterno-démarreur 2 et le moteur thermique 1.

## Revendications

1. Procédé de détection d'une défaillance d'une courroie (3) reliant un alterno-démarreur (2) à un moteur thermique (1), **caractérisé en ce que** :
- on mesure ou estime le régime de l'alterno-démarreur lorsque le moteur thermique (1) est tournant (MTH tour) à un régime moteur (Nm) compris entre deux seuils de régime moteur prédéfinis et si le régime de l'alterno-démarreur (Na, Nb) s'avère inférieur à une première valeur de régime (Nd1) prédéfinie au moins pendant une première durée (td1) prédéfinie, la courroie (3) est détectée comme étant potentiellement cassée,
- puis, on impose un couple générateur (Cg) nul à l'alterno-démarreur (2),
et si le régime de l'alterno-démarreur (Na, Nb) s'avère inférieur à une deuxième valeur de régime (Nd2) prédéfinie durant une deuxième durée (td2) prédéfinie, la courroie (3) est confirmée comme étant cassée ou dans le cas où la deuxième valeur de régime (Nd2) prédéfinie est atteinte avant une fin de la deuxième durée (td2) prédéfinie, la courroie (3) est considérée comme glissante mais non cassée.

2. Procédé de détection selon la revendication 1, dans lequel la première valeur de régime (Nd1) prédéfinie et / ou la deuxième valeur de régime (Nd2) prédéfinie sont choisies de sorte à filtrer d'éventuelles oscillations de régime de l'alterno-démarreur autour de son régime nul.

3. Procédé de détection selon la revendication 2, dans lequel la première valeur de régime (Nd1) prédéfinie est proche de la valeur nulle en étant inférieure à 100 tours/minute et la première durée (td1) prédéfinie est comprise entre 20 et 200 millisecondes, le régime de l'alterno-démarreur (Nb) étant ramené dans un référentiel vilebrequin, un vilebrequin étant entraîné par le moteur thermique (1).

4. Procédé de détection selon la revendication 3, dans lequel la deuxième durée (td2) prédéfinie est supérieure de 20 à 50 fois à la première durée (td1) prédéfinie, de préférence d'environ 5 secondes.

5. Procédé de détection selon l'une quelconque des revendications précédentes, dans lequel la deuxième valeur de régime (Nd2) prédéfinie est inférieure à 50 tours/minute.

6. Procédé de détection selon l'une quelconque des revendications précédentes, dans lequel, il est procédé en phase de démarrage (dem MTH) du moteur thermique (1) à une comparaison des régimes du moteur (Nm) et de l'alterno-démarreur (Na, Nb) et si la différence entre ces régimes (Nm; Na, Nb) est supérieure à une valeur de différence de régime (ΔNd) prédéfinie pendant au moins une troisième durée (td3) prédéfinie, il est détecté que la courroie (3) est cassée.

7. Procédé de gestion du fonctionnement d'un moteur thermique (1) comprenant un système d'arrêt et de redémarrage automatique du moteur thermique (1), une courroie (3) reliant un alterno-démarreur (2) au moteur thermique (1), **caractérisé en ce qu'**il est effectué une détection de courroie (3) cassée conformément à un procédé de détection selon l'une quelconque des revendications précédentes, une interdiction d'arrêt automatique du moteur thermique (1) étant valide dès que la courroie (3) est détectée comme étant cassée.

8. Procédé de gestion selon la revendication 7, dans lequel, quand une deuxième valeur de régime (Nd2) pour l'alterno-démarreur (2) et une deuxième durée (td2) sont prédéfinies et que la deuxième valeur de régime (Nd2) est atteinte avant la fin de la deuxième durée (td2), ce qui correspond à la détection d'une courroie (3) glissante, l'interdiction d'arrêt du moteur thermique (1) n'est que temporaire pendant une quatrième durée prédéfinie et calibrable.

9. Ensemble comprenant un moteur thermique (1), un alterno-démarreur (2), une courroie (3) reliant l'alterno-démarreur (2) au moteur thermique (1), une unité de contrôle-commande (4) pilotant l'alterno-démarreur (2) et le moteur thermique (1), **caractérisé en ce que** l'unité de contrôle-commande (4) comprend les moyens d'acquisition, de traitement par instructions logicielles stockées dans une mémoire et des moyens de commandes requis pour la mise en œuvre d'un procédé de détection selon l'une quelconque des revendications 1 à 6.

10. Ensemble selon la revendication 9, comportant un système d'arrêt et de redémarrage automatique du moteur thermique (1), **caractérisé en ce que** l'unité de contrôle-commande (4) comprend en outre les moyens d'acquisition, de traitement par instructions logicielles stockées dans une mémoire et des moyens de commandes requis pour la mise en œuvre d'un procédé de gestion selon l'une quelconque des revendications 7 ou 8.

## Patentansprüche

1. Verfahren zum Detektion eines Ausfalls eines Riemens (3), der einen Generatorstarter (2) mit einer Wärmekraftmaschine (1) verbindet, **gekennzeichnet durch**:
- Die Drehzahl des Generatorstarters wird gemessen oder geschätzt, wenn sich die Wärmekraftmaschine (1) mit einer Motordrehzahl (Nm) dreht (MTH tour), die zwischen zwei vordefinierten Drehzahlschwellen liegt, und wenn die Drehzahl der Lichtmaschine Starter (Na, Nb) erweist sich zumindest für eine erste vordefinierte Dauer (td1) als kleiner als ein erster vordefinierter Geschwindigkeitswert (Nd1). Der Riemen (3) wird als möglicherweise gerissen erkannt.
- dann wird dem Generatorstarter (2) ein Generatordrehmoment (Cg) Null auferlegt, und wenn sich herausstellt, dass die Drehzahl des Generatorstarters (Na, Nb) niedriger ist als ein zweiter Wert der Drehzahl (Nd2), der während einer vordefinierten zweiten Dauer (td2) vordefiniert wurde, wird bestätigt, dass der Riemen (3) gebrochen oder eingelaufen ist Wird der zweite voreingestellte Geschwindigkeitswert (Nd2) vor dem Ende der zweiten voreingestellten Dauer (td2) erreicht, gilt der Riemen (3) als rutschig, aber nicht gebrochen.

2. Detektionsverfahren nach Anspruch 1, bei dem der vordefinierte erste Drehzahlwert (Nd1) und / oder der vordefinierte zweite Drehzahlwert (Nd2) gewählt werden, um mögliche Drehzahlschwankungen des Generators herauszufiltern Starter um sein Null-Regime.

3. Detektionsverfahren nach Anspruch 2, bei dem der erste vordefinierte Geschwindigkeitswert (Nd1) nahe dem Nullwert liegt, indem er weniger als 100 Umdrehungen / Minute beträgt, und die erste vordefinierte Dauer (td1) zwischen 20 und 200 Millisekunden liegt wobei die Drehzahl des Generatorstarters (Nb) in einen Kurbelwellenreferenzrahmen zurückgebracht wird, wobei eine Kurbelwelle von der Wärmekraftmaschine (1) angetrieben wird.

4. Detektionsverfahren nach Anspruch 3, bei dem die vordefinierte zweite Dauer (td2) größer als das 20- bis 50-fache der vordefinierten ersten Dauer (td1) ist, vorzugsweise ungefähr 5 Sekunden.

5. Detektionsverfahren gemäß einem der vorhergehenden Ansprüche, bei dem der zweite vordefinierte Geschwindigkeitswert (Nd2) weniger als 50 Umdrehungen / Minute beträgt.

6. Detektionsverfahren nach einem der vorhergehenden Ansprüche, bei dem es in der Anlaufphase (dem MTH) der Wärmekraftmaschine (1) mit einem Vergleich der Motordrehzahlen (Nm) und der Alternative durchgeführt wird Starter (Na, Nb) und wenn die Differenz zwischen diesen Geschwindigkeiten (Nm; Na, Nb) für mindestens eine dritte vordefinierte Dauer (td3) größer als ein vordefinierter Geschwindigkeitsdifferenzwert (ΔNd) ist, wird festgestellt, dass der Riemen (3) ist kaputt.

7. Verfahren zum Verwalten des Betriebs einer Wärmekraftmaschine (1), umfassend ein System zum automatischen Stoppen und Neustarten der Wärmekraftmaschine (1), einen Riemen (3), der einen Generatorstarter (2) mit der Wärmekraftmaschine (1) verbindet), **dadurch gekennzeichnet, dass** ein gerissener Riemen (3) gemäß einem Detektionsverfahren gemäß einem der vorhergehenden Ansprüche erfasst wird, wobei ein Verbot des automatischen Stoppens der Wärmekraftmaschine (1) gültig ist, sobald die Riemen (3) wird als gerissen erkannt.

8. Verwaltungsverfahren nach Anspruch 7, bei dem ein zweiter Drehzahlwert (Nd2) für den Generatorstarter (2) und eine zweite Dauer (td2) vordefiniert sind und der zweite Drehzahlwert (Nd2) Wird vor dem Ende der zweiten Dauer (td2) erreicht, was der Erkennung eines rutschigen Riemens (3) entspricht, ist das Verbot des Stoppens der Wärmekraftmaschine (1) nur für eine vierte vordefinierte Dauer vorübergehend und kalibrierbar.

9. Baugruppe bestehend aus einem Wärmemotor (1), einem Lichtmaschinenstarter (2), einem Riemen (3), der den Lichtmaschinenstarter (2) mit dem Wärmemotor (1) verbindet, einer Steuerbefehlseinheit (4), die antreibt der Lichtmaschinenstarter (2) und die Wärmekraftmaschine (1), die **dadurch gekennzeichnet sind, dass** die Steuerbefehlseinheit (4) die Mittel zur Erfassung, Verarbeitung durch in einem Speicher gespeicherte Softwareanweisungen und Mittel von umfasst Befehle, die zur Implementierung eines Erfassungsverfahrens gemäß einem der Ansprüche 1 bis 6 erforderlich sind.

10. Baugruppe nach Anspruch 9, umfassend ein System zum automatischen Stoppen und Neustarten der Wärmekraftmaschine (1), **gekennzeichnet dadurch, dass** die Steuerbefehlseinheit (4) ferner die Mittel zum Erfassen, Verarbeiten umfasst durch Softwareanweisungen, die in einem Speicher gespeichert sind, und Steuermittel, die zur Implementierung eines Verwaltungsverfahrens gemäß einem der Ansprüche 7 oder 8 erforderlich sind.

## Claims

1. Method for detecting a failure of a belt (3) connecting an alternator-starter (2) to a heat engine (1), **characterized in that**:
- the speed of the alternator-starter is measured or estimated when the heat engine (1) is turning (MTH tour) at an engine speed (Nm) comprised between two predefined engine speed thresholds and if the speed of the alternator- starter (Na, Nb) proves to be less than a first predefined speed value (Nd1) at least for a first predefined duration (td1), the belt (3) is detected as being potentially broken,
- then, a generator torque (Cg) zero is imposed on the alternator-starter (2),
and if the speed of the alternator-starter (Na, Nb) proves to be lower than a second value of speed (Nd2) predefined during a second duration (td2) predefined, the belt (3) is confirmed as being broken or in if the second predefined speed value (Nd2) is reached before the end of the second predefined duration (td2), the belt (3) is considered to be slippery but not broken.

2. Detection method according to claim 1, in which the predefined first speed value (Nd1) and / or the predefined second speed value (Nd2) are chosen so as to filter out possible oscillations in speed of the alternator starter around his zero regime.

3. Detection method according to claim 2, in which the first predefined speed value (Nd1) is close to the zero value by being less than 100 revolutions / minute and the first predefined duration (td1) is between 20 and 200 milliseconds , the speed of the alternator-starter (Nb) being brought back into a crankshaft reference frame, a crankshaft being driven by the heat engine (1).

4. Detection method according to claim 3, in which the predefined second duration (td2) is greater than 20 to 50 times than the predefined first duration (td1), preferably approximately 5 seconds.

5. Detection method according to any one of the preceding claims, in which the second predefined speed value (Nd2) is less than 50 revolutions / minute.

6. Detection method according to any one of the preceding claims, in which it is carried out in the start-up phase (dem MTH) of the heat engine (1) to a comparison of the engine speeds (Nm) and of the alternator- starter (Na, Nb) and if the difference between these speeds (Nm; Na, Nb) is greater than a predefined speed difference value (ΔNd) for at least a third predefined duration (td3), it is detected that the belt (3) is broken.

7. Method for managing the operation of a heat engine (1) comprising a system for automatically stopping and restarting the heat engine (1), a belt (3) connecting an alternator-starter (2) to the heat engine (1), **characterized in that** a broken belt (3) is detected in accordance with a detection method according to any one of the preceding claims, a ban on automatic stopping of the heat engine (1) being valid as soon as the belt (3) is detected as broken.

8. Management method as claimed in claim 7, in which when a second speed value (Nd2) for the alternator-starter (2) and a second duration (td2) are predefined and the second speed value (Nd2) is reached before the end of the second duration (td2), which corresponds to the detection of a slippery belt (3), the ban on stopping the heat engine (1) is only temporary for a fourth predefined duration and calibratable.

9. Assembly comprising a thermal engine (1), an alternator-starter (2), a belt (3) connecting the alternator-starter (2) to the thermal engine (1), a control-command unit (4) driving the alternator-starter (2) and the heat engine (1), **characterized in that** the control-command unit (4) comprises the means of acquisition, of processing by software instructions stored in a memory and means of commands required for the implementation of a detection method according to any one of claims 1 to 6.

10. Assembly of claim 9, comprising a system for automatically stopping and restarting the heat engine (1), **characterized in that** the control-command unit (4) further comprises the means of acquisition, processing by software instructions stored in a memory and control means required for the implementation of a management method according to any one of claims 7 or 8.
